# EUROPEAN PATENT APPLICATION

(11) **EP 4 793 307 A1**
(43) Date of publication of application: **19.08.2026**
(21) Application number: 24877506.6
(22) Date of filing: 08.10.2024
(51) Int. Cl.: C08J 5/18, C08L 67/02

(54) **POLYESTER HEAT-SHRINKABLE FILM HAVING IMPROVED SHRINKAGE PROPERTIES**

(30) Priority: 11.10.2023 KR 20230135418
(71) Applicant: SK Chemicals Co., Ltd., Seongnam-si, Gyeonggi-do 13494 (KR)
(72) Inventor: HWANG, Da-Young, Seongnam-si, Gyeonggi-do 13494 (KR); KIM, Sangwoo, Seongnam-si, Gyeonggi-do 13494 (KR); KIM, Eui-Su, Seongnam-si, Gyeonggi-do 13494 (KR); KIM, Ha-Neul, Seongnam-si, Gyeonggi-do 13494 (KR); EOM, Jiyeon, Seongnam-si, Gyeonggi-do 13494 (KR); LEE, Boo-Youn, Seongnam-si, Gyeonggi-do 13494 (KR)
(74) Representative: Dehns
(86) International application number: PCT/KR2024/015301
(87) International publication number: WO 2025/079970

(57) **Abstract**

This polyester heat-shrinkable film in which dynamic viscoelasticity before and after shrinkage is adjusted to within a specific range may have an improved shrinkage rate and shrinkage uniformity at high temperatures. Therefore, the heat-shrinkable film can be applied to packaging and labeling of containers or bottles to improve quality.

## Description

### Technical Field

The present invention relates to a heat-shrinkable polyester film with enhanced shrinkage characteristics.

### Background Art

Polyester, among polymers, is used as a material in various fields by virtue of its excellent mechanical strength, thermal resistance, transparency, and gas barrier properties. In particular, heat-shrinkable films prepared using a polyester resin have high thermal resistance and an appropriate heat shrinkage rate; thus, they are suitable for packaging materials and/or labels for plastic containers such as PET bottles.

The labeling or packaging process using a heat-shrinkable film is carried out by first placing a heat-shrinkable film cut to an appropriate size and shape on a washed and dried container or bottle; and then having the film shrunk to tightly fit the shape of the container or bottle through a thermal treatment process at high temperatures. If the shrinkage rate of the film is low or the shrinkage is not uniform in this process, breakage may occur, which may cause poor printability in the subsequent printing process.

The shrinkage characteristics of heat-shrinkable films, such as shrinkage rate and shrinkage uniformity at high temperatures, are related to the crystallinity of the polymer that constitutes the film. Crystallinity may vary depending on the composition of the polymer or the stretching and thermal treatment processes adopted in the procedure of preparing the film. Accordingly, in order to achieve the shrinkage characteristics required for heat-shrinkable films, the components of the polymer resin are adjusted, or the stretching and thermal treatment conditions in the procedure of preparing the films are appropriately modified.

For example, Korean Patent No. 0785251 discloses a technique in which 5% by weight or more of a polyester elastomer is blended in the preparation of a heat-shrinkable film to suppress the generation of wrinkles, shrinkage stains, distortions, and the like when the film is used for full wrapping of plastic bottles.

### [Prior Art Document]

### [Patent Document]

(Patent Document 1) Korean Patent No. 0785251 (December 5, 2007)

### Detailed Description of the Invention

### Technical Problem

The shrinkage characteristics of a heat-shrinkable film may vary depending on not only the raw material resin but also the preparation process of the film, making it difficult to control them.

The present inventors have discovered that when the tan δ ratio before and after shrinkage of a heat-shrinkable film is controlled to a specific range, the shrinkage characteristics are enhanced.

Accordingly, an object of the present invention is to provide a heat-shrinkable polyester film controlled to have high shrinkage and shrinkage uniformity.

### Solution to the Problem

The present invention provides a heat-shrinkable film, which comprises a copolymerized polyester resin comprising a diol component and a dicarboxylic acid component, wherein when the film is cut in the main shrinkage direction, mounted on tensile clamps, and measured using a dynamic mechanical analyzer (DMA) under a temperature elevation condition of 3°C/minute from 30°C to 150°C at a frequency of 1 Hz, the temperature (°C) at which tan δ is 1 or more is within the range of 65°C to 100°C, and the tan δ max ratio calculated by the following equation is 50% or more.$Tan δ max ratio = \left(tan δ\left[1\right]max/tan δ\left[2\right]max\right) \times 100$

Here, tan δ [1]max is the maximum value of tan δ measured for the heat-shrinkable film under the above temperature elevation condition, tan δ [2]max is the maximum value of tan δ measured under the above temperature elevation condition after the heat-shrinkable film is shrunk at 95°C for 30 seconds, and tan δ is G"/G' in which G" is the loss modulus, and G' is the storage modulus.

### Advantageous Effects of the Invention

In the heat-shrinkable polyester film according to the present invention, the dynamic viscoelasticity before and after shrinkage, specifically the tan δ ratio, is controlled to a specific range; thus, it is possible to effectively control the shrinkage rate and shrinkage uniformity at high temperatures.

Since this heat-shrinkable film is excellent in shrinkage rate and shrinkage uniformity, as well as excellent in stretchability and printability, it can be applied to the packaging and labeling of containers or bottles, resulting in enhanced quality.

### Best Mode for Carrying out the Invention

In this specification, terms referring to the respective components are used to distinguish them from each other and are not intended to limit the scope of the embodiment. In addition, in the present specification, a singular expression is interpreted to cover a plural number as well unless otherwise specified in the context.

In the present specification, the terms first, second, and the like are used to describe various components. But the components should not be limited by the terms. The terms are used for the purpose of distinguishing one element from another.

In the present specification, the term "comprising" is intended to specify a particular characteristic, region, step, process, element, and/or component. It does not exclude the presence or addition of any other characteristic, region, step, process, element, and/or component, unless specifically stated to the contrary.

In the numerical range that limits the size and physical properties of components and the like described in the present specification, when a numerical range limited with the upper limit only and a numerical range limited with the lower limit only are separately exemplified, it should be understood that a numerical range combining these upper and lower limits is also encompassed in the exemplary scope of the invention.

### Characteristics of the heat-shrinkable film

According to the present invention, the dynamic viscoelasticity, specifically the characteristics relating to tan δ, of the heat-shrinkable polyester film is controlled to a specific range. As a result, it is possible to provide a heat-shrinkable polyester film with a high shrinkage rate, shrinkage uniformity, and stretchability.

Tan δ (tan delta) is defined as the loss modulus (G") divided by the storage modulus (G') (i.e., tan δ = G"/G'), which may be an important indicator for confirming the shrinkage characteristics of a film. The loss modulus stands for viscous behavior and indicates how much energy is lost, and the storage modulus stands for elastic behavior and indicates how much energy is stored.

Since tan δ stands for the energy lost due to internal friction associated with molecular rearrangement when stress is applied to a polymer, it can be viewed as an indicator that quantifies the damping properties of a polymer. Even if the composition of the polymer that constitutes a film is the same, the tan δ of the film may vary due to the changes in elasticity and viscosity caused by molecular orientation during the stretching process.

Tan δ can be measured, for example, using a dynamic mechanical analysis (DMA) device. First, a sample is cut to an appropriate size and mounted on clamps or holders of a DMA, and periodic stress or strain is then applied while the sample is heated or cooled. In the DMA, the phase difference between the periodic stress and response is measured, from which the loss modulus and storage modulus of the sample are obtained, and tan δ is then calculated.

Specifically, the heat-shrinkable film may be cut in the main shrinkage direction and mounted on tensile clamps to measure tan δ using a dynamic mechanical analysis (DMA) device under a temperature elevation condition of 3°C/minute from 30°C to 150°C at a frequency of 1 Hz.

In a tan δ curve with respect to temperature obtained from DMA, the maximum peak may appear near the glass transition temperature (Tg), the height of the peak may indicate the number of molecular chains moving with respect to the temperature, and the full width at half maximum (FWHM) of the peak may provide information about the movement of chain segments.

When the peak temperature or peak height in a tan δ curve is high, it means that the film is flexible and has a structure that is easy to absorb shock, which is viewed to be attributable to a decrease in the crystallinity of the resin or a reduction in the crystal size.

In particular, the temperature range where tan δ is 1 or more is a range where viscosity is high relative to elasticity; thus, it may be interpreted as a temperature range where the heat-shrinkable film exhibits high shrinkage characteristics.

According to the present invention, the temperature (°C) at which tan δ of the heat-shrinkable film is 1 or more is 65°C or higher. In addition, the temperature (°C) at which tan δ of the heat-shrinkable film is 1 or more may be 100°C or lower.

If the temperature at which the tan δ measured in the main shrinkage direction of a heat-shrinkable film is 1 or more is lower than 65°C, the crack resistance at room temperature deteriorates, and the film properties are likely to change over time. In addition, if the temperature at which the tan δ measured in the main shrinkage direction of a heat-shrinkable film is 1 or more exceeds 100°C, it becomes difficult to achieve the high shrinkage characteristics required in the present invention.

According to an embodiment, when the heat-shrinkable film is cut in the main shrinkage direction and mounted on tensile clamps to measure tan δ using a dynamic mechanical analysis (DMA) device under a temperature elevation condition of 3°C/minute from 30°C to 150°C at a frequency of 1 Hz, the temperature (°C) at which tan δ is 1 or more falls within the range of 65°C to 100°C.

For example, the temperature (°C) at which tan δ of the heat-shrinkable film is 1 or more may be 65°C or higher, 68°C or higher, 70°C or higher, 73°C or higher, or 75°C or higher, and may be 100°C or lower, 95°C or lower, 90°C or lower, or 85°C or lower. As a specific example, the temperature (°C) at which tan δ of the heat-shrinkable film is 1 or more may be 65°C to 100°C or 68°C to 100°C.

In particular, according to the subject invention, it is characterized in that the tan δ characteristics of the heat-shrinkable film before and after shrinkage are controlled together.

The heat-shrinkable film according to an embodiment may be a film stretched in the main shrinkage direction; thus, tan δ before shrinkage may refer to tan δ for the stretched film, and tan δ after shrinkage may refer to tan δ for the stretched and shrunken film. Meanwhile, since the film after shrinkage is very similar to the film in an unstretched state, tan δ after shrinkage may also be regarded as tan δ for the unstretched film.

As tan δ before and after shrinkage of the film is taken into account as described above, the shrinkage characteristics of the film can be controlled more effectively.

According to an embodiment, when the heat-shrinkable film is measured under the above temperature elevation condition after shrinkage at 95°C for 30 seconds, the temperature (°C) at which tan δ is 1 or more may fall within the range of 65°C to 85°C.

For example, the temperature (°C) at which tan δ of the heat-shrinkable film after shrinkage is 1 or more may be 65°C or higher, 68°C or higher, 70°C or higher, 73°C or higher, or 75°C or higher, and may be 85°C or lower, 83°C or lower, 80°C or lower, or 77°C or lower. As a specific example, the temperature (°C) at which tan δ of the heat-shrinkable film after shrinkage is 1 or more may be 65°C to 85°C or 68°C to 85°C.

In particular, as the ratio of the maximum tan δ values of the film before and after shrinkage is adjusted to a specific range, the shrinkage rate and shrinkage uniformity can be effectively controlled. Specifically, the shrinkage rate and shrinkage stress attributed to the crystallinity of the resin itself or the crystallinity occurring during the stretching process are reflected in the tan δ of the film. As the ratio of the maximum tan δ values of the film before and after shrinkage is adjusted to a specific range, they can be effectively controlled.

According to an embodiment, when the heat-shrinkable film is cut in the main shrinkage direction and mounted on tensile clamps to measure tan δ using a dynamic mechanical analysis (DMA) device under a temperature elevation condition of 3°C/minute from 30°C to 150°C at a frequency of 1 Hz, the tan δ max ratio calculated by the following equation is 50% or more. $Tan δ max ratio = \left(tan δ \left[1\right]max/tan δ \left[2\right]max\right) \times 100$

Here, tan δ [1]max is the maximum value of tan δ measured for the heat-shrinkable film under the above temperature elevation condition, and tan δ [2]max is the maximum value of tan δ measured under the above temperature elevation condition after the heat-shrinkable film is shrunk at 95°C for 30 seconds.

In contrast, if the tan δ max ratio is less than 50%, the crystallinity of the polyester that constitutes the heat-shrinkable film is too high, so that whitening may occur due to partial crystallization during heat shrinkage, and the adhesion between the films may deteriorate, or adhesion may become impossible.

For example, the tan δ max ratio may be 50% or more, 55% or more, 60% or more, 65% or more, 70% or more, or 75% or more, and may be 120% or less, 100% or less, 95% or less, 90% or less, 85% or less, or 80% or less. As a specific example, the tan δ max ratio may be 50% to 120%, 50% to 100%, 50% to 95%, 55% to 100%, or 55% to 95%.

In addition, in the heat-shrinkable film according to an embodiment, the temperature at which tan δ of the film before shrinkage is 1 or more may be higher than the temperature at which tan δ of the film after shrinkage is 1 or more. This is attributed to the fact that the polymer chains are oriented during the stretching process of the film, and the degree to which the oriented chains move with respect to the temperature is different from that of the film after shrinkage.

In a specific embodiment, the heat-shrinkable film may satisfy the following Relationship (a). $Tmax \left[1\right] > Tmax \left[2\right]$

Here, Tmax [1] is the highest temperature (°C) among the temperatures (°C) at which tan δ is 1 or more when measured for the heat-shrinkable film under the above temperature elevation condition, and Tmax [2] is the highest temperature (°C) among the temperatures (°C) at which tan δ is 1 or more when measured under the above temperature elevation condition after the heat-shrinkable film is shrunk at 95°C for 30 seconds.

In another specific embodiment, the heat-shrinkable film may satisfy the following Relationship (a'). $Tmin \left[1\right] > Tmin \left[2\right]$

Here, Tmin [1] is the lowest temperature (°C) among the temperatures (°C) at which tan δ is 1 or more when measured for the heat-shrinkable film under the above temperature elevation condition, and Tmin [2] is the lowest temperature (°C) among the temperatures (°C) at which tan δ is 1 or more when measured under the above temperature elevation condition after the heat-shrinkable film is shrunk at 95°C for 30 seconds.

In addition, in the heat-shrinkable film according to an embodiment, the size of the temperature range where tan δ is 1 or more may be controlled to a specific range.

The temperature range where tan δ is 1 or more varies depending on the degree of crystal orientation of the polymer chains during the stretching process. As the crystal orientation increases, the temperature range where tan δ is 1 or more increases. Accordingly, if the temperature range where tan δ 1 or more is too large, it may be difficult to satisfy a high shrinkage rate during the shrinkage process due to an increase in crystal orientation. On the other hand, if the temperature range where tan δ 1 or more is too small, the polymer chains are not sufficiently oriented due to the decrease in crystal orientation, which may make it difficult to satisfy shrinkage uniformity in the shrinkage process.

In a specific embodiment, the heat-shrinkable film may satisfy the following Relationship (b). $10 ° C \leq Tmax \left[1\right] - Tmin \left[1\right] \leq 30 ° C$

Here, Tmax [1] is the highest temperature (°C) among the temperatures (°C) at which tan δ is 1 or more when measured for the heat-shrinkable film under the above temperature elevation condition, and Tmin [1] is the lowest temperature (°C) among the temperatures (°C) at which tan δ is 1 or more when measured for the heat-shrinkable film under the above temperature elevation condition.

For example, the calculated value of Tmax [1] - Tmin [1] in Relationship (b) may be 10°C to 30°C, 15°C to 30°C, 10°C to 25°C, 15°C to 25°C, 15°C to 20°C, or 10°C to 20°C.

In another specific embodiment, the heat-shrinkable film may satisfy the following Relationship (b'). $1 ° C \leq Tmax \left[2\right] - Tmin \left[2\right] \leq 20 ° C$

Here, Tmax [2] is the highest temperature (°C) among the temperatures (°C) at which tan δ is 1 or more when measured under the above temperature elevation condition after the heat-shrinkable film is shrunk at 95°C for 30 seconds, and Tmin [2] is the lowest temperature (°C) among the temperatures (°C) at which tan δ is 1 or more when measured under the above temperature elevation condition after the heat-shrinkable film is shrunk at 95°C for 30 seconds.

For example, the calculated value of Tmax [2] - Tmin [2] in Relationship (b') may be 1°C to 20°C, 1°C to 15°C, 5°C to 20°C, 5°C to 15°C, 1°C to 10°C, or 5°C to 10°C.

In addition, in the heat-shrinkable film according to an embodiment, the size of the temperature range where tan δ is 1 or more before shrinkage may be greater than that after shrinkage by a certain level or more. A difference in tan δ by a certain level or more between the stretched film and the shrunken film indicates the orientation of the polymer chains. When a certain level or more of chain orientation occurs, it may exhibit a high shrinkage rate and stretching uniformity, which are characteristics of heat-shrinkable films.

In a specific embodiment, the heat-shrinkable film may satisfy the following Relationship (c). $3 ° C \leq \left(Tmax \left[1\right]-Tmin \left[1\right]\right) - \left(Tmax \left[2\right]-Tmin \left[2\right]\right)$

Here, Tmax [1] is the highest temperature (°C) among the temperatures (°C) at which tan δ is 1 or more when measured for the heat-shrinkable film under the above temperature elevation condition, and Tmin [1] is the lowest temperature (°C). Tmax [2] is the highest temperature (°C) among the temperatures (°C) at which tan δ is 1 or more when measured under the above temperature elevation condition after the heat-shrinkable film is shrunk at 95°C for 30 seconds, and Tmin [2] is the lowest temperature (°C).

For example, the calculated value of (Tmax [1] - Tmin [1]) - (Tmax [2] - Tmin [2]) in Relationship (c) may be 3°C or more, 5°C or more, 7°C or more, or 10°C or more, and may be 30°C or less, 25°C or less, 20°C or less, or 15°C or less.

In addition, in the heat-shrinkable film according to an embodiment, the stiffness ratio before and after shrinkage may be adjusted to a specific range, resulting in excellent stretchability.

Specifically, the heat-shrinkable film may have a stiffness ratio of 150% or more as defined by the following equation. $Stiffness ratio = \left(stiffness \left[2\right]/stiffness \left[1\right]\right) \times 100$

Here, stiffness [1] is the stiffness measurement value (N/m) of the heat-shrinkable film, and stiffness [2] is the stiffness measurement value (N/m) of the heat-shrinkable film measured after the film is shrunk at 95°C for 30 seconds. The stiffness is measured at a temperature at which the tan δ measurement value of the heat-shrinkable film is 1.

Within the above preferred range, the orientation of the polymer that constitutes the film may be appropriately adjusted, resulting in enhanced stretchability.

For example, the stiffness ratio may be 150% or more, 200% or more, 250% or more, 300% or more, 350% or more, or 400% or more, and may be 700% or less, 600% or less, or 500% or less. As a specific example, the stiffness ratio may be 150% to 700%, 150% to 600%, or 150% to 500%.

In addition, in the heat-shrinkable film according to an embodiment, the shrinkage speed with respect to temperature may be controlled to a certain range in the heat shrinkage process temperature range.

Specifically, when the heat-shrinkable film is cut to 15.5 cm in the main shrinkage direction and mounted on film tensile clamps, and when the temperature is raised from 65°C to 85°C at a rate of 5°C/minute and held for 1 minute at 5°C intervals, the shrinkage that occurs during the temperature elevation may be -0.3 cm/°C to -0.7 cm/°C.

As described above, the shrinkage rate with respect to temperature is high at -0.3 cm/°C or more, whereby sufficient shrinkage can be achieved. The change in shrinkage rate with respect to temperature is appropriate at -0.7 cm/°C or less, whereby shrinkage uniformity with respect to the change in temperature can be secured.

Accordingly, the heat-shrinkable film has less risk that the film would break due to tension during the processing that may reduce the operability of the processing.

More specifically, the shrinkage may be -0.3 cm/°C to -0.7 cm/°C, -0.4 cm/°C to -0.7 cm/°C, -0.5 cm/°C to -0.7 cm/°C, -0.3 cm/°C to -0.6 cm/°C, -0.3 cm/°C to -0.5 cm/°C, or -0.4 cm/°C to -0.6 cm/°C.

The heat-shrinkable film may have a shrinkage rate at a certain level or higher at high temperatures. For example, the heat-shrinkable film may have a shrinkage rate of 60% or more in the main shrinkage direction under the conditions of 90°C and 15 seconds. Specifically, the heat shrinkage rate of the heat-shrinkable film in the main shrinkage direction may be 60% to 80% under the conditions of 90°C and 15 seconds.

The heat-shrinkable film according to an embodiment may be a film that has been stretched in at least one direction. The heat-shrinkable film may be a film that has been uniaxially stretched in the machine direction (MD) or transverse direction (TD) or biaxially stretched in these two directions.

As an example, the heat-shrinkable film may be a film that has been stretched by 1 to 5 times or 1.1 to 4.5 times in the longitudinal direction (MD). As another example, the heat-shrinkable film may be a film that has been stretched by 1.5 to 6 times or 2.5 to 5.5 times in the transverse direction (TD). As another example, the heat-shrinkable film may be a film that has been stretched by 1 to 5 times in the longitudinal direction (MD) and 1.5 to 6 times in the transverse direction (TD).

In the heat-shrinkable film, the machine direction (MD) or transverse direction (TD) may be the main shrinkage direction. Specifically, the stretching ratio of the heat-shrinkable film in the main shrinkage direction may be 1.5 to 6 times. More specifically, the heat-shrinkable film may be a film in which the transverse direction (TD) is the main shrinkage direction.

### Component of the heat-shrinkable film

The heat-shrinkable film according to the present invention comprises a copolymerized polyester resin comprising a diol component and a dicarboxylic acid component.

In addition, at least one of the diol component and the dicarboxylic acid component may comprise a recycled monomer.

According to the present invention, the diol component may be a diol component used in the preparation of a copolymerized polyester resin.

Specifically, the diol component may be at least one selected from the group consisting of bis(2-hydroxyethyl) terephthalate (BHET), isosorbide, neopentyl glycol, ethylene glycol, cyclohexanedimethanol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol.

Preferably, when the crystallinity, heat shrinkability, and economical efficiency of the heat-shrinkable polyester film are taken into consideration, the diol component may comprise two or more (specifically, 3 or more, 4 or more, or 5 or more) selected from the group consisting of bis(2-hydroxyethyl) terephthalate, isosorbide, ethylene glycol, cyclohexanedimethanol, neopentyl glycol, diethylene glycol, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol.

Also, the diol component may comprise ethylene glycol and at least one (specifically, 2 or more, 3 or more, or 4 or more) selected from the group consisting of bis(2-hydroxyethyl) terephthalate, isosorbide, cyclohexanedimethanol, neopentyl glycol, diethylene glycol, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol as a comonomer.

When the diol component comprises ethylene glycol and the comonomer, the amount of these components is not particularly limited, but the amount of ethylene glycol may be 10 to less than 100% by weight, 15 to 90% by weight, 20 to 85% by weight, 30 to 85% by weight, 50 to 80% by weight, or 50 to 85% by weight, and the amount of the comonomer may be greater than 0 to 90% by weight, greater than 0 to 85% by weight, 1 to 90% by weight, 1 to 50% by weight, 2 to 50% by weight, 10 to 85% by weight, 15 to 80% by weight, 15 to 70% by weight, or 15 to 50% by weight, based on the total weight of the diol component.

The amount of isosorbide used as the comonomer may be 0 to 30% by weight, 0 to 10% by weight, 0 to 3% by weight, 0.1 to 20% by weight, 0.5 to 10% by weight, 0.5 to 5% by weight, 0.5 to 3% by weight, or 1 to 3% by weight, based on the total weight of the diol component. The amount of 1,4-cyclohexanediol used as the comonomer may be 0 to 50% by weight, 0 to 40% by weight, 1 to 50% by weight, 2 to 50% by weight, 3 to 45% by weight, 4 to 40% by weight, or 5 to 35% by weight, based on the total weight of the diol component. The amount of neopentyl glycol used as the comonomer may be 0 to 50% by weight, 0 to 30% by weight, 1 to 50% by weight, 2 to 50% by weight, 3 to 45% by weight, 4 to 40% by weight, or 5 to 35% by weight, based on the total weight of the diol component. The amount of diethylene glycol used as the comonomer may be 0 to 50% by weight, 1 to 50% by weight, 1 to 30% by weight, 1 to 15% by weight, 2 to 50% by weight, 3 to 45% by weight, 4 to 40% by weight, 5 to 35% by weight, 5 to 25% by weight, or 5 to 15% by weight, based on the total weight of the diol component.

The polyester resin according to the present invention may comprise a structural unit derived from isosorbide as a copolymerization unit in an amount of 0 to 30% by mole, 0 to 10% by mole, 0 to 3% by mole, 0.1 to 20% by mole, 0.5 to 10% by mole, 0.5 to 5% by mole, 0.5 to 3% by mole, or 1 to 3% by mole. The polyester resin according to the present invention may comprise a structural unit derived from 1,4-cyclohexanediol as a copolymerization unit in an amount of 0 to 50% by mole, 0 to 35% by mole, 1 to 50% by mole, 2 to 50% by mole, 3 to 45% by mole, 4 to 40% by mole, or 5 to 35% by mole. The polyester resin according to the present invention may comprise a structural unit derived from neopentyl glycol as a copolymerization unit in an amount of 0 to 50% by mole, 0 to 30% by mole, 1 to 50% by mole, 2 to 50% by mole, 3 to 45% by mole, 4 to 40% by mole, or 5 to 35% by mole. The polyester resin according to the present invention may comprise a structural unit derived from diethylene glycol as a copolymerization unit in an amount of 0 to 50% by mole, 1 to 50% by mole, 2 to 50% by mole, 3 to 45% by mole, 4 to 40% by mole, or 5 to 35% by mole.

According to the present invention, the dicarboxylic acid component may be a commonly known dicarboxylic acid.

Specifically, the dicarboxylic acid component may comprise at least one selected from the group consisting of isophthalic acid, terephthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

Preferably, when the crystallinity and heat shrinkability of the stretched polyester film are taken into consideration, the dicarboxylic acid component may comprise at least one selected from the group consisting of isophthalic acid, terephthalic acid, dimethyl phthalate, and dimethyl isophthalate.

Also, the dicarboxylic acid component may comprise a recycled monomer obtained by the depolymerization of waste polyester. As a specific example, the dicarboxylic acid component may comprise at least one recycled monomer selected from the group consisting of a recycled dicarboxylic acid and a recycled dicarboxylic acid derivative. As a more specific example, the dicarboxylic acid component may comprise at least one recycled monomer selected from the group consisting of recycled isophthalic acid, recycled terephthalic acid, recycled dimethyl isophthalate, and recycled dimethyl phthalate, but it is not limited thereto.

The recycled monomers obtained by the depolymerization of waste polyester as described above need to be understood as distinct from virgin monomers or pure monomers. Specifically, recycled monomers may contain reagents or solvents used in various chemical steps during the depolymerization of waste polyester or by-products formed by side reactions with them. Thus, monomers recycled by a common depolymerization process contain organic and inorganic impurities in addition to the monomer compounds as the main component; thus, its purity is not high. For this reason, a recycled monomer may also be viewed as a kind of composition comprising two or more components.

According to the present invention, the intrinsic viscosity (IV) of the polyester resin at 35°C may be 0.5 dl/g or more or 0.6 dl/g or more, and may be 1.2 dl/g or less, 1.1 dl/g or less, 1.0 dl/g or less, 0.9 dl/g or less, or 0.8 dl/g or less.

According to a specific embodiment, the copolymerized polyester resin may have an intrinsic viscosity of 0.5 dl/g to 0.9 dl/g at 35°C. Within the preferred range of intrinsic viscosity, it is advantageous for securing the processability of the copolymerized polyester resin. Specifically, the polyester resin is dissolved in ortho-chlorophenol (OCP) at 100°C at a concentration of 0.12%, and the intrinsic viscosity is measured with an Ubbelohde viscometer in a thermostat at 35°C.

### Process for preparing a heat-shrinkable film

the method for preparing a heat-shrinkable film according to the present invention comprises, a diol component and a dicarboxylic acid component to prepare a polyester resin (S-1); preparing a stretched sheet from the polyester resin (S-2); and heat-setting the stretched sheet.

In step (S-1), a diol component and a dicarboxylic acid component are polymerized to prepare a polyester resin (a copolymer). Since the diol component and the dicarboxylic acid component for the polymerization are the same as described above, a description thereon is omitted.

The polymerization of the diol component and the dicarboxylic acid component may be carried out by a conventionally known method (e.g., liquid phase polymerization, solid phase polymerization, or the like). A batch reactor or a continuous reactor may be used for the polymerization reaction. Specifically, the polymerization reaction may comprise an esterification reaction (transesterification reaction) of preparing an oligomer by reacting a diol component with a dicarboxylic acid component and a polycondensation reaction of the oligomer.

The temperature at which the esterification reaction is carried out is not particularly limited, but it may be 230 to 270°C, 235 to 268°C, 240 to 265°C, or 240 to 260°C, when the physical properties of a polyester resin and a stretched polyester film are taken into consideration. In addition, the period of time during which the esterification reaction is carried out is not particularly limited, but it may be 1 to 24 hours, 2 to 22 hours, 3 to 20 hours, or 4 to 18 hours. In addition, the pressure at which the esterification reaction is carried out is not particularly limited, but it may be 0 to 5.0 kgf/cm2, 0.1 to 4.5 kgf/cm2, 0.1 to 4.0 kgf/cm2, or 0.1 to 3.0 kgf/cm2.

The temperature at which the polycondensation reaction is carried out is not particularly limited, but it may be 245 to 290°C, 250 to 285°C, 255 to 280°C, or 255 to 270°C, when the physical properties of a polyester resin and a stretched polyester film are taken into consideration. In addition, the period of time during which the polycondensation reaction is carried out is not particularly limited, but it may be 1 to 24 hours, 2 to 24 hours, 5 to 22 hours, or 7 to 20 hours.

Meanwhile, an additive comprising at least one selected from the group consisting of a catalyst, a stabilizer, a colorant, a crystallizing agent, an antioxidant, and a branching agent may be employed in the polymerization reaction.

The catalyst is not particularly limited, but it may specifically be methylates of sodium and magnesium; acetates, borates, fatty acid salts or carbonate of Zn, Cd, Mn, Co, Ca, Ba, and oxides or hydrates of Mg, Pb, Mn, Ti, Zn, Sb, and Ge. For example, the catalyst may be tetraethyl titanate, acetyltripropyl titanate, tetrapropyl titanate, tetrabutyl titanate, 2-ethylhexyl titanate, octylene glycol titanate, triethanolamine titanate, acetylacetonate titanate, ethylacetoacetic ester titanate, isostearyl titanate, titanium dioxide, germanium dioxide, germanium tetrachloride, germanium ethyleneglycoxide, germanium acetate, or combinations thereof.

The stabilizer is not particularly limited, but a phosphorus-based compound such as phosphoric acid, trimethyl phosphate, and triethyl phosphate may be used.

The colorant is not particularly limited, but organic compounds such as cobalt-based compounds, anthraquinone-based compounds, perinone-based compounds, azo-based compounds, and methine-based compounds (for example, cobalt acetate, cobalt propionate, Polysynthren Blue RLS toner of Clarient, and Solvaperm Red BB toner of Clarient) may be used.

The crystallizing agent is not particularly limited, but a crystal nucleating agent, an ultraviolet absorber, a polyolefin resin, a polyamide resin, or the like may be used.

The antioxidant is not particularly limited, but hindered phenol-based compounds, phosphite-based compounds, thioether-based compounds, or the like may be used.

The branching agent is not particularly limited, but trimellitic anhydride, trimethylol propane, trimellitic acid, or the like may be used.

In step (S-2), a stretched sheet is prepared from the polyester resin obtained in step (S-1). The preparation of the stretched sheet may be carried out by a conventionally known method. Specifically, a stretched sheet may be prepared through a melting and casting step of a polyester resin, a uniaxial or biaxial stretching step, and the like.

The melting and casting step of the polyester resin may be carried out through an extruder. In such an event, the melt extrusion temperature is not particularly limited, but it may be 180°C to 310°C, 200°C to 310°C, 230°C to 310°C, 240°C to 300°C, 250°C to 290°C, 250°C to 280°C, or 250°C to 275°C. An unstretched sheet may be obtained through such a step, and the unstretched sheet thus obtained may be transferred to a stretching step. The unstretched sheet may be preheated to a predetermined temperature (e.g., 90°C to 120°C) before going through the stretching step.

The uniaxial or biaxial stretching step may comprise a step of stretching the unstretched sheet obtained through the melting and casting step in the longitudinal direction (MD), the transverse direction (TD), or both directions. Stretching in the longitudinal direction may be carried out at a stretching ratio of 1 to 5 times or 1.1 to 4.5 times at 55°C to 180°C, 60°C to 170°C, or 75°C to 90°C. The stretching in the transverse direction may be carried out at a stretching ratio of 1.5 to 6 times, 2.5 to 5.5 times, 3.5 to 6 times, 4 to 6 times, 4.5 to 6 times, 4.5 to 5.5 times, or 3.5 to 5.5 times at 55°C to 180°C, 60°C to 170°C, 60°C to 130°C, 60°C to 90°C, 60°C to 85°C, 75°C to 90°C, or 75°C to 85°C.

In step (S-3), the stretched sheet obtained in step (S-2) is heat set. The temperature at which the stretched sheet is heat set is not particularly limited, but it may be similar to, or higher than, the temperature of the stretching step. Specifically, the heat-setting temperature may be 60°C to 200°C, 65°C to 190°C, 65°C to 180°C, or 65°C to 170°C. As the heat-setting temperature is within the above range, a stretched polyester film having high crystallinity and high mechanical strength can be prepared.

### Embodiments for Carrying Out the Invention

### [Example]

Hereinafter, a preferred embodiment is presented for the understanding of the present invention. However, the following examples are provided only to help easily understand the present invention, and the scope of the present invention is not limited thereby.

### <Preparation of a heat-shrinkable film>

### Example 1

### (1) Preparation of a copolymerized polyester resin

A reactor equipped with a column and a condenser that can be cooled by water was charged with terephthalic acid (TPA, 3,846.5 g), isosorbide (ISB, 48.3 g), ethylene glycol (EG, 1,300.6 g), 1,4-cyclohexanedimethanol (CHDM, 778.6 g), diethylene glycol (DEG, 375.5 g), a Ge catalyst (GeO₂, 1.0 g), a Ti catalyst (1.0 g), phosphoric acid (1.5 g), a blue toner (0.005 g), and a red toner (0.003 g). Subsequently, after the temperature of the reactor was raised, an esterification reaction was carried out at 265°C at a pressure higher than normal pressure by 2 kgf/cm² to obtain a transparent reactant.

Subsequently, the reactant was transferred to a polycondensation reactor, and a polycondensation reaction was then carried out at 270°C while the pressure of the polycondensation reactor was maintained at a lower pressure than normal pressure. When the intrinsic viscosity (IV) of the mixture in the polycondensation reactor reached 0.77 dl/g, the mixture was then discharged to the outside of the polycondensation reactor to form strands, which were solidified with a cooling liquid and then granulated to have an average weight of about 12 to 14 mg to prepare polyester resin (copolymer) chips.

### (2) Preparation of a heat-shrinkable film

The polyester resin chips prepared in the above preparation example were fed to an extruder, melt-extruded at a temperature of 270°C, and cast at a temperature of 40°C to prepare an unstretched polyester sheet. Subsequently, the unstretched sheet was heated to 80°C and stretched 5 times in the transverse direction (TD) only to prepare a stretched polyester sheet. The stretched polyester sheet was heat set to prepare a stretched polyester film having a thickness of 50 µm.

### Example 2

### (1) Preparation of a copolymerized polyester resin

A reactor equipped with a column and a condenser that can be cooled by water was charged with terephthalic acid (TPA, 3,831.6 g), ethylene glycol (EG, 1,672.8 g), 1,4-cyclohexanedimethanol (CHDM, 627.8 g), neopentyl glycol (NPG, 53.3 g), diethylene glycol (DEG, 374.2 g), a CHDM derivative (123.7 g), a Ti catalyst (1.0 g), phosphoric acid (1.5 g), a blue toner (0.005 g), and a red toner (0.005 g). Subsequently, after the temperature of the reactor was raised, an esterification reaction was carried out at 255°C at a pressure higher than normal pressure by 1 kgf/cm² to obtain a transparent reactant.

Subsequently, the reactant was transferred to a polycondensation reactor, and a polycondensation reaction was then carried out at 285°C while the pressure of the polycondensation reactor was maintained at a lower pressure than normal pressure. When the intrinsic viscosity (IV) of the mixture in the polycondensation reactor reached 0.65 dl/g, the mixture was then discharged to the outside of the polycondensation reactor to form strands, which were solidified with a cooling liquid and then granulated to have an average weight of about 12 to 14 mg to prepare polyester resin (copolymer) chips.

### (2) Preparation of a heat-shrinkable film

The polyester resin chips prepared in the above preparation example were fed to an extruder, melt-extruded at a temperature of 260°C, and cast at a temperature of 25°C to prepare an unstretched polyester sheet. Subsequently, the unstretched sheet was heated to 80°C and stretched 4.5 times in the transverse direction (TD) only to prepare a stretched polyester sheet. The stretched polyester sheet was heat set to prepare a stretched polyester film having a thickness of 50 µm.

### Example 3

### (1) Preparation of a copolymerized polyester resin

A reactor equipped with a column and a condenser that can be cooled by water was charged with terephthalic acid (TPA, 2,949.8 g), recycled bis(2-hydroxyethyl) terephthalate (r-BHET, 1,128.4 g), ethylene glycol (EG, 412.2 g), 1,4-cyclohexanedimethanol (CHDM, 1,243.9 g), diethylene glycol (DEG, 277.0 g), a Ge catalyst (1.0 g), phosphoric acid (1.5 g), a blue toner (0.005 g), and a red toner (0.005 g). Subsequently, after the temperature of the reactor was raised, an esterification reaction was carried out at 273°C at normal pressure to obtain a transparent reactant.

Subsequently, the reactant was transferred to a polycondensation reactor, and a polycondensation reaction was then carried out at 275°C while the pressure of the polycondensation reactor was maintained at a lower pressure than normal pressure. When the intrinsic viscosity (IV) of the mixture in the polycondensation reactor reached 0.80 dl/g, the mixture was then discharged to the outside of the polycondensation reactor to form strands, which were solidified with a cooling liquid and then granulated to have an average weight of about 12 to 14 mg to prepare polyester resin (copolymer) chips.

### (2) Preparation of a heat-shrinkable film

The polyester resin chips prepared in the above preparation example were fed to an extruder, melt-extruded at a temperature of 260°C, and cast at a temperature of 68°C to prepare an unstretched polyester sheet. Subsequently, the unstretched sheet was heated to 78°C and stretched 4.5 times in the transverse direction (TD) only to prepare a stretched polyester sheet. The stretched polyester sheet was heat set to prepare a stretched polyester film having a thickness of 50 µm.

### Example 4

### (1) Preparation of a copolymerized polyester resin

A reactor equipped with a column and a condenser that can be cooled by water was charged with terephthalic acid (TPA, 3,959.2 g), ethylene glycol (EG, 2,040.3 g), 1,4-cyclohexanedimethanol (CHDM, 534.2 g), diethylene glycol (DEG, 416.4 g), a Ge catalyst (1.0 g), phosphoric acid (1.5 g), a blue toner (0.025 g), and a red toner (0.010 g). Subsequently, after the temperature of the reactor was raised, an esterification reaction was carried out at 260°C at a pressure higher than normal pressure by 1 kgf/cm² to obtain a transparent reactant.

Subsequently, the reactant was transferred to a polycondensation reactor, and a polycondensation reaction was then carried out at 275°C while the pressure of the polycondensation reactor was maintained at a lower pressure than normal pressure. When the intrinsic viscosity (IV) of the mixture in the polycondensation reactor reached 0.78 dl/g, the mixture was then discharged to the outside of the polycondensation reactor to form strands, which were solidified with a cooling liquid and then granulated to have an average weight of about 12 to 14 mg to prepare polyester resin (copolymer) chips.

### (2) Preparation of a heat-shrinkable film

The polyester resin chips prepared in the above preparation example were fed to an extruder, melt-extruded at a temperature of 275°C, and cast at a temperature of 35°C to prepare an unstretched polyester sheet. Subsequently, the unstretched sheet was heated to 78°C and stretched 5 times in the transverse direction (TD) only to prepare a stretched polyester sheet. The stretched polyester sheet was heat set to prepare a stretched polyester film having a thickness of 50 µm.

### Example 5

### (1) Preparation of a copolymerized polyester resin

A reactor equipped with a column and a condenser that can be cooled by water was charged with terephthalic acid (TPA, 4,139.7 g), ethylene glycol (EG, 2,216.1 g), neopentyl glycol (NPG, 432.3 g), diethylene glycol (DEG, 155.5 g), a Ge catalyst (1.0 g), phosphoric acid (1.5 g), cobalt acetate (0.2 g), a blue toner (0.015 g), and a red toner (0.005 g). Subsequently, after the temperature of the reactor was raised, an esterification reaction was carried out at 250°C at a pressure higher than normal pressure by 1 kgf/cm² to obtain a transparent reactant.

Subsequently, the reactant was transferred to a polycondensation reactor, and a polycondensation reaction was then carried out at 285°C while the pressure of the polycondensation reactor was maintained at a lower pressure than normal pressure. When the intrinsic viscosity (IV) of the mixture in the polycondensation reactor reached 0.70 dl/g, the mixture was then discharged to the outside of the polycondensation reactor to form strands, which were solidified with a cooling liquid and then granulated to have an average weight of about 12 to 14 mg to prepare polyester resin (copolymer) chips.

### (2) Preparation of a heat-shrinkable film

The polyester resin chips prepared in the above preparation example were fed to an extruder, melt-extruded at a temperature of 270°C, and cast at a temperature of 36°C to prepare an unstretched polyester sheet. Subsequently, the unstretched sheet was heated to 85°C and stretched 4.5 times in the transverse direction (TD) only to prepare a stretched polyester sheet. The stretched polyester sheet was heat set to prepare a stretched polyester film having a thickness of 50 µm.

### Example 6

### (1) Preparation of a copolymerized polyester resin

A reactor equipped with a column and a condenser that can be cooled by water was charged with terephthalic acid (TPA, 2,291.3 g), recycled bis(2-hydroxyethyl) terephthalate (r-BHET, 1,144.2 g), ethylene glycol (EG, 369.7 g), 1,4-cyclohexanedimethanol (CHDM, 720.8 g), neopentyl glycol (NPG, 650.7 g), diethylene glycol (DEG, 196.6 g), a Ge catalyst (1.0 g), phosphoric acid (1.5 g), cobalt acetate (0.2 g), a blue toner (0.015 g), and a red toner (0.005 g). Subsequently, after the temperature of the reactor was raised, an esterification reaction was carried out at 265°C at a pressure higher than normal pressure by 2 kgf/cm² to obtain a transparent reactant.

Subsequently, the reactant was transferred to a polycondensation reactor, and a polycondensation reaction was then carried out at 270°C while the pressure of the polycondensation reactor was maintained at a lower pressure than normal pressure. When the intrinsic viscosity (IV) of the mixture in the polycondensation reactor reached 0.78 dl/g, the mixture was then discharged to the outside of the polycondensation reactor to form strands, which were solidified with a cooling liquid and then granulated to have an average weight of about 12 to 14 mg to prepare polyester resin (copolymer) chips.

### (2) Preparation of a heat-shrinkable film

The polyester resin chips prepared in the above preparation example were fed to an extruder, melt-extruded at a temperature of 260°C, and cast at a temperature of 38°C to prepare an unstretched polyester sheet. Subsequently, the unstretched sheet was heated to 85°C and stretched 4.5 times in the transverse direction (TD) only to prepare a stretched polyester sheet. The stretched polyester sheet was heat set to prepare a stretched polyester film having a thickness of 50 µm.

### Comparative Example 1

### (1) Preparation of a copolymerized polyester resin

A reactor equipped with a column and a condenser that can be cooled by water was charged with terephthalic acid (TPA, 3,280.6 g), recycled bis(2-hydroxyethyl) terephthalate (r-BHET, 1,254.9 g), ethylene glycol (EG, 1,487.6 g), 1,4-cyclohexanedimethanol (CHDM, 395.3 g), diethylene glycol (DEG, 154.0 g), a Ti catalyst (1.0 g), phosphoric acid (1.5 g), a blue toner (0.005 g), and a red toner (0.005 g). Subsequently, after the temperature of the reactor was raised, an esterification reaction was carried out at 263°C at a pressure higher than normal pressure by 1 kgf/cm² to obtain a transparent reactant.

Subsequently, the reactant was transferred to a polycondensation reactor, and a polycondensation reaction was then carried out at 285°C while the pressure of the polycondensation reactor was maintained at a lower pressure than normal pressure. When the intrinsic viscosity (IV) of the mixture in the polycondensation reactor reached 0.70 dl/g, the mixture was then discharged to the outside of the polycondensation reactor to form strands, which were solidified with a cooling liquid and then granulated to have an average weight of about 12 to 14 mg to prepare polyester resin (copolymer) chips.

### (2) Preparation of a heat-shrinkable film

The polyester resin chips prepared in the above preparation example were fed to an extruder, melt-extruded at a temperature of 280°C, and cast at a temperature of 25°C to prepare an unstretched polyester sheet. Subsequently, the unstretched sheet was heated to 90°C and stretched 4.5 times in the transverse direction (TD) only to prepare a stretched polyester sheet. The stretched polyester sheet was heat set to prepare a stretched polyester film having a thickness of 50 µm.

### Comparative Example 2

### (1) Preparation of a copolymerized polyester resin

A reactor equipped with a column and a condenser that can be cooled by water was charged with terephthalic acid (TPA, 3,259.2 g), recycled bis(2-hydroxyethyl) terephthalate (r-BHET, 554.1 g), ethylene glycol (EG, 971.5 g), 1,4-cyclohexanedimethanol (CHDM, 349.0 g), diethylene glycol (DEG, 272.0 g), a Ti catalyst (1.0 g), phosphoric acid (1.5 g), a blue toner (0.010 g), and a red toner (0.005 g). Subsequently, after the temperature of the reactor was raised, an esterification reaction was carried out at 263°C at normal pressure to obtain a transparent reactant.

Subsequently, the reactant was transferred to a polycondensation reactor, and a polycondensation reaction was then carried out at 275°C while the pressure of the polycondensation reactor was maintained at a lower pressure than normal pressure. When the intrinsic viscosity (IV) of the mixture in the polycondensation reactor reached 0.78 dl/g, the mixture was then discharged to the outside of the polycondensation reactor to form strands, which were solidified with a cooling liquid and then granulated to have an average weight of about 12 to 14 mg to prepare polyester resin (copolymer) chips.

### (2) Preparation of a heat-shrinkable film

The polyester resin chips prepared in the above preparation example were fed to an extruder, melt-extruded at a temperature of 270°C, and cast at a temperature of 25°C to prepare an unstretched polyester sheet. Subsequently, the unstretched sheet was heated to 85°C and stretched 4 times in the transverse direction (TD) only to prepare a stretched polyester sheet. The stretched polyester sheet was heat set to prepare a stretched polyester film having a thickness of 50 µm.

### Comparative Example 3

### (1) Preparation of a copolymerized polyester resin

A reactor equipped with a column and a condenser that can be cooled by water was charged with terephthalic acid (TPA, 3,316.3 g), ethylene glycol (EG, 122.2 g), 1,4-cyclohexanedimethanol (CHDM, 2,237.5 g), diethylene glycol (DEG, 49.8 g), a Ti catalyst (1.0 g), phosphoric acid (1.5 g), a blue toner (0.005 g), and a red toner (0.005 g). Subsequently, after the temperature of the reactor was raised, an esterification reaction was carried out at 263°C at a pressure higher than normal pressure by 1 kgf/cm² to obtain a transparent reactant.

Subsequently, the resulting material was transferred to a polycondensation reactor, and a polycondensation reaction was then carried out at 275°C while the pressure of the polycondensation reactor was maintained at a lower pressure than normal pressure. When the intrinsic viscosity (IV) of the mixture in the polycondensation reactor reached 0.70 dl/g, the mixture was then discharged to the outside of the polycondensation reactor to form strands, which were solidified with a cooling liquid and then granulated to have an average weight of about 12 to 14 mg to prepare polyester resin (copolymer) chips.

### (2) Preparation of a heat-shrinkable film

The polyester resin chips prepared in the above preparation example were fed to an extruder, melt-extruded at a temperature of 290°C, and cast at a temperature of 40°C to prepare an unstretched polyester sheet. Subsequently, the unstretched sheet was heated to 95°C and stretched 4 times in the transverse direction (TD) only to prepare a stretched polyester sheet. The stretched polyester sheet was heat set to prepare a stretched polyester film having a thickness of 50 µm.

### <Evaluation of the heat-shrinkable films>

### Test Example 1: tan δ (DMA)

The tan δ of the heat-shrinkable films prepared in the Examples and Comparative Examples were each measured.
(1) Tan δ - stretched film
   - Sample: Each film with a thickness of approximately 50 µm stretched in the TD direction was cut in the width direction (TD).
   - The stretched film sample was mounted on tensile clamps to obtain a tan δ curve using a dynamic mechanical analysis (DMA) device (Q800 of TA) under a temperature elevation condition of 3°C/minute from 30°C to 150°C at a frequency of 1 Hz (tan δ = E'/E", where E' is the storage modulus, and E" is the loss modulus).
   - Among the temperatures where tan δ ≥ 1, the lowest temperature (min) and the highest temperature (max) were obtained, and their difference value (max - min) was obtained.
(2) Tan δ - after shrinkage
   - Sample: Each film with a thickness of approximately 50 µm stretched in the TD direction was cut in the width direction (TD) and shrunk under the conditions of 95°C and 30 seconds.
   - A tan δ curve of the film sample after shrinkage was obtained in the same manner as in Section (1) above.
   - Among the temperatures where tan δ ≥ 1, the lowest temperature (min) and the highest temperature (max) were obtained, and their difference value (max - min) was obtained.
(3) Tan δ gap
   The difference value (i.e., the value of (1) - (2)) between the temperature gap (max - min) at which tan δ ≥ 1 of the stretched film measured in Section (1) above and the temperature gap (max - min) at which tan δ ≥ 1 of the film after shrinkage measured in Section (2) above was obtained.
(4) Tan δ maximum value ratio
   The ratio (i.e., the value of (1)/(2)) of the maximum value of tan δ of the stretched film measured in Section (1) above and the maximum value of tan δ of the film after shrinkage measured in Section (2) above was obtained.

### Test Example 2: Stiffness

The stiffness of the films prepared in the Examples and Comparative Examples were each measured.
(1) Stiffness - stretched film
   - Sample: Each film with a thickness of approximately 50 µm stretched in the TD direction was cut in the width direction (TD).
   - The stretched film sample was mounted on tensile clamps to measure stiffness using a dynamic mechanical analysis (DMA) device (Q800 of TA) under a temperature elevation condition of 3°C/minute from 30°C to 150°C at a frequency of 1 Hz.
(2) Stiffness - after shrinkage
   - Sample: Each film with a thickness of approximately 50 µm stretched in the TD direction was cut in the width direction (TD) and shrunk under the conditions of 95°C and 30 seconds.
   - Stiffness after shrinkage was measured in the same manner as in Section (1) above.
(3) Stiffness ratio
   The ratio (i.e., the value of (2)/(1)) of the stiffness of the stretched film after shrinkage measured in Section (2) above and the stiffness of the film measured in Section (1) above was obtained. The stiffness was measured at a temperature at which the tan δ measurement value of the heat-shrinkable film was 1.

### Test Example 3: Shrinkage uniformity

The shrinkage uniformity of each of the films prepared in the Examples and Comparative Examples was measured.
- Sample: Each film with a thickness of approximately 50 µm stretched in the TD direction was cut to have an initial dimension of 15.5 cm in the width direction (TD).
- When the stretched film sample was mounted on tensile clamps, and when the temperature was raised from 65°C to 85°C at a rate of 5°C/minute and held for 1 minute at 5°C intervals, the shrinkage (cm) that occurred during the temperature elevation was measure. Shrinkage (cm/°C) with respect to temperature was calculated based on the measured values to evaluate shrinkage uniformity.

### Test Example 4: Intrinsic viscosity

The polyester resins prepared in the Examples were each dissolved in ortho-chlorophenol (OCP) at 100°C at a concentration of 0.12%, and the intrinsic viscosity (IV, dl/g) was measured with an Ubbelohde viscometer in a thermostat at 35°C. As a result, all the polyester resins obtained in the Examples were confirmed to have an intrinsic viscosity in the range of 0.5 dl/g to 0.9 dl/g at 35°C.

The test results are shown in the Table below.

**[Table 1]**

| | | | Ex. 1 | Ex. 2 | Ex. 3 | Ex. 4 | Ex. 5 | Ex. 6 |
|---|---|---|---|---|---|---|---|---|
| Stretched film | Tan δ ≥ 1 | min | 74.0 | 72.5 | 76.6 | 69.8 | 77.6 | 76.5 |
| | Temp. (°C) | max | 98.0 | 87.6 | 86.6 | 84.8 | 97.6 | 91.5 |
| | | max - min [1] | 24.0 | 15.1 | 10.0 | 15.0 | 20.0 | 15.0 |
| After shrinkage | Tan δ ≥ 1 | min | 70.7 | 70.3 | 74.5 | 69.2 | 75.0 | 75.4 |
| | Temp. (°C) | max | 80.7 | 77.8 | 81.5 | 78.4 | 83.9 | 83.5 |
| | | max - min [2] | 10.0 | 7.5 | 7.0 | 9.2 | 8.9 | 8.1 |
| | Tan δ gap | [1] - [2] | 14.0 | 7.6 | 3.0 | 5.8 | 11.1 | 6.9 |

**[Table 2]**

| | | | C. Ex. 1 | C. Ex. 2 | C. Ex. 3 |
|---|---|---|---|---|---|
| Stretched film | Tan δ ≥ 1 | min | - | 76 | - |
| | Temp. (°C) | max | - | 90.1 | - |
| | | max - min [1] | - | 14.1 | - |
| After shrinkage | Tan δ ≥ 1 | min | 76.0 | 75.0 | 84.4 |
| | Temp. (°C) | max | 87 | 85.5 | 94.6 |
| | | max - min [2] | 11.0 | 10.5 | 10.2 |
| | Tan δ gap | [1] - [2] | - | 3.6 | - |

**[Table 3]**

| | | Ex. 1 | Ex. 2 | Ex. 3 | Ex. 4 | Ex. 5 | Ex. 6 |
|---|---|---|---|---|---|---|---|
| Stretched film | Tan δ max | 1.26 | 1.6 | 1.15 | 1.42 | 1.76 | 1.56 |
| | Stiffness (N/m) | 12,047 | 16,698 | 14,257 | 9,766 | 8,298 | 10,700 |
| After shrinkage | tan δ max | 1.98 | 1.98 | 2.02 | 2.17 | 2.05 | 2.05 |
| | Stiffness (N/m) | 38,337 | 30,217 | 35,785 | 39,196 | 39,272 | 39,664 |
| Stretched film/ after shrinkage | Tan δ max ratio | 64% | 81% | 57% | 65% | 86% | 76% |
| | Stiffness ratio | 318% | 181% | 251% | 401% | 473% | 371% |

**[Table 4]**

| | | C. Ex. 1 | C. Ex. 2 | C. Ex. 3 |
|---|---|---|---|---|
| Stretched film | Tan δ max | 0.4 | 0.9 | 0.8 |
| | Stiffness (N/m) | 31220 | 15460 | 41200 |
| After shrinkage | tan δ max | 2 | 2 | 1.95 |
| | Stiffness (N/m) | 45440 | 38,250 | 57890 |
| Stretched film/ after shrinkage | Tan δ max ratio | 20% | 45% | 41% |
| | Stiffness ratio | 146% | 247% | 141% |

**[Table 5]**

| | Ex. 1 | Ex. 2 | Ex. 3 | Ex. 4 | Ex. 5 | Ex. 6 | C. Ex. 1 | C. Ex. 2 | C. Ex. 3 |
|---|---|---|---|---|---|---|---|---|---|
| Shrinkage (cm/°C) | -0.55 | -0.45 | -0.62 | -0.51 | -0.37 | -0.50 | -0.21 | -0.71 | -0.10 |

As can be seen from the above test results, the heat-shrinkable films of Examples 1 to 6 had tan δ characteristics and stiffness characteristics before and after shrinkage controlled to desirable ranges. As a result, their shrinkage uniformity was excellent, which fell within the range of -0.3 cm/°C to -0.7 cm/°C at 65 to 85°C.

In contrast, the heat-shrinkable films of Comparative Examples 1 to 3 had tan δ characteristics and stiffness characteristics outside the desired ranges. In particular, the films of Comparative Examples 1 and 3 did not have a temperature range in which tan δ was 1 or more. As a result, the films of Comparative Examples 1 to 3 were evaluated to have poor shrinkage uniformity.

## Claims

1. A heat-shrinkable film, which comprises a copolymerized polyester resin comprising a diol component and a dicarboxylic acid component,
wherein when the film is cut in the main shrinkage direction, mounted on tensile clamps, and measured using a dynamic mechanical analysis (DMA) device under a temperature elevation condition of 3°C/minute from 30°C to 150°C at a frequency of 1 Hz, the temperature (°C) at which tan δ is 1 or more is within the range of 65°C to 100°C, and the tan δ max ratio calculated by the following equation is 50% or more: $Tan δ max ratio = \left(tan δ \left[1\right]max/tan δ \left[2\right]max\right) \times 100$
wherein tan δ [1]max is the maximum value of tan δ measured for the heat-shrinkable film under the above temperature elevation condition, tan δ [2]max is the maximum value of tan δ measured under the above temperature elevation condition after the heat-shrinkable film is shrunk at 95°C for 30 seconds, and tan δ is G"/G' in which G" is the loss modulus, and G' is the storage modulus.

2. The heat-shrinkable film of claim 1, wherein when the heat-shrinkable film is measured under the above temperature elevation condition after shrinkage at 95°C for 30 seconds, the temperature (°C) at which tan δ is 1 or more falls within the range of 65°C to 85°C.

3. The heat-shrinkable film of claim 1, wherein the heat-shrinkable film satisfies the following Relationship (a): $Tmax \left[1\right] > Tmax \left[2\right]$ wherein Tmax [1] is the highest temperature (°C) among the temperatures (°C) at which tan δ is 1 or more when measured for the heat-shrinkable film under the above temperature elevation condition, and Tmax [2] is the highest temperature (°C) among the temperatures (°C) at which tan δ is 1 or more when measured under the above temperature elevation condition after the heat-shrinkable film is shrunk at 95°C for 30 seconds.

4. The heat-shrinkable film of claim 1, wherein the heat-shrinkable film satisfies the following Relationship (b): $10 ° C \leq Tmax \left[1\right] - Tmin \left[1\right] \leq 30 ° C$ wherein Tmax [1] is the highest temperature (°C) among the temperatures (°C) at which tan δ is 1 or more when measured for the heat-shrinkable film under the above temperature elevation condition, and Tmin [1] is the lowest temperature (°C) among the temperatures (°C) at which tan δ is 1 or more when measured for the heat-shrinkable film under the above temperature elevation condition.

5. The heat-shrinkable film of claim 1, wherein the heat-shrinkable film satisfies the following Relationship (c): $3 ° C \leq \left(Tmax\left[1\right]-Tmin\left[1\right]\right) - \left(Tmax\left[2\right]-Tmin\left[2\right]\right)$
wherein Tmax [1] is the highest temperature (°C) among the temperatures (°C) at which tan δ is 1 or more when measured for the heat-shrinkable film under the above temperature elevation condition, Tmin [1] is the lowest temperature (°C),
Tmax [2] is the highest temperature (°C) among the temperatures (°C) at which tan δ is 1 or more when measured under the above temperature elevation condition after the heat-shrinkable film is shrunk at 95°C for 30 seconds, and Tmin [2] is the lowest temperature (°C).

6. The heat-shrinkable film of claim 1, wherein the heat-shrinkable film has a stiffness ratio of 150% or more as defined by the following equation: $Stiffness ratio = \left(stiffness\left[2\right]/stiffness\left[1\right]\right) \times 100$ wherein stiffness [1] is the stiffness measurement value (N/m) of the heat-shrinkable film, and stiffness [2] is the stiffness measurement value (N/m) of the heat-shrinkable film measured after the film is shrunk at 95°C for 30 seconds, in which the stiffness is measured at a temperature at which the tan δ measurement value of the heat-shrinkable film is 1.

7. The heat-shrinkable film of claim 1, wherein the stretching ratio of the heat-shrinkable film in the main shrinkage direction is 1.5 to 6 times.

8. The heat-shrinkable film of claim 1, wherein when the heat-shrinkable film is cut to 15.5 cm in the main shrinkage direction and mounted on film tensile clamps, and when the temperature is raised from 65°C to 85°C at a rate of 5°C/minute and held for 1 minute at 5°C intervals, the shrinkage that occurs during the temperature elevation is -0.3 cm/°C to -0.7 cm/°C.

9. The heat-shrinkable film of claim 1, wherein the diol component is at least one selected from the group consisting of bis(2-hydroxyethyl) terephthalate (BHET), isosorbide, neopentyl glycol, ethylene glycol, cyclohexanedimethanol, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol, 4-(hydroxymethyl)cyclohexylmethyl-4-(hydroxymethyl)cyclohexanecarboxylate, and 4-(4-(hydroxymethyl)cyclohexylmethoxymethyl)cyclohexylmethanol, and
the dicarboxylic acid component is at least one selected from the group consisting of isophthalic acid, terephthalic acid, dimethyl isophthalate, phthalic acid, dimethyl phthalate, phthalic anhydride, 2,6-naphthalenedicarboxylic acid, dimethyl 2,6-naphthalenedicarboxylate, diphenyl dicarboxylic acid, 1,4-cyclohexanedicarboxylic acid, 1,3-cyclohexanedicarboxylic acid, dimethyl 1,4-cyclohexanedicarboxylate, dimethyl 1,3-cyclohexanedicarboxylate, sebacic acid, succinic acid, isodecylsuccinic acid, maleic acid, maleic anhydride, fumaric acid, adipic acid, glutaric acid, and azelaic acid.

10. The heat-shrinkable film of claim 1, wherein at least one of the diol component and the dicarboxylic acid component comprises a recycled monomer.

11. The heat-shrinkable film of claim 1, wherein the copolymerized polyester resin has an intrinsic viscosity at 35°C of 0.5 dl/g to 0.9 dl/g.
